# EUROPÄISCHE PATENTSCHRIFT

(11) **EP 1 974 957 B1**
(45) Veröffentlichungstag und Bekanntmachung des Hinweises auf die Patenterteilung: **09.12.2009**
(21) Anmeldenummer: 08151064.6
(22) Anmeldetag: 05.02.2008
(51) Int. Cl.: B60C 11/13

(54) **Fahrzeugluftreifen**
Pneumatic tyres for a vehicle
Pneus de véhicule

(30) Priorität: 30.03.2007 DE 102007015354
(43) Veröffentlichungstag der Anmeldung: 01.10.2008
(73) Patentinhaber: Continental Aktiengesellschaft, 30165 Hannover (DE)
(72) Erfinder: Kuhn, Martin, 30171 Hannover (DE); Schlittenhard, Jan, 30900 Wedemark (DE)
(74) Vertreter: Finger, Karsten

(56) Entgegenhaltungen:
- EP-A- 0 299 729
- EP-A- 0 844 107
- WO-A-02/087902
- JP-A- 2001 219 712
- JP-A- 2005 067 274
- US-A1- 2003 024 621
- US-A1- 2006 016 538
- US-A1- 2007 012 389

## Beschreibung

Die Erfindung betrifft einen Fahrzeugreifen - insbesondere Fahrzeugluftreifen - mit profiliertem Laufstreifen, mit wenigstens einer in Umfangsrichtung U des Fahrzeugluftreifens ausgerichteten und über den Umfang des Fahrzeugluftreifens erstreckten Profilblockreihe aus in Umfangsrichtung U hintereinander und jeweils durch eine Querrille voneinander getrennten Profilblockelementen, wobei in wenigstens einer Querrille ein radial aus dem Rillengrund erhabener, quer zur Längserstreckungsrichtung der Querrille erstreckter Steg ausgebildet ist, der die beiden durch die Querrille von einander getrennten und in Umfangsrichtung U benachbarten Profilblockelemente mit einander verbindet.

Es sind derartige Fahrzeugreifen bekannt, bei denen in Umfangsrichtung hintereinander angeordnete Profilblockelemente durch eine Erhebung des Rillengrundes in einem Teilerstreckungsbereich der die Profilblockelemente trennenden Querrille, die sich quer zur Längserstreckungsrichtung der Querrille erstreckt, zur Versteifung mit einander verbunden werden. Aus der WO-A-02/087902 ist es bekannt, solche Stege zur besseren Wasseraufnahme bei Erhaltung der versteifenden Blockanbindung im radial inneren Bereich des Steges am Rillengrundes den Steg mit Hinterschnitten auszubilden.

Soweit die bekannten Fahrzeugreifen auf Matsch oder Schnee eingesetzt werden, werden die Griffeigenschaften üblicherweise durch besondere Ausbildung der Profilblöcke, der Rillenanordnung und -richtung, durch besondere Ausbildung von Feineinschnitten durch das gewählte Gummimaterial bestimmt, die zum Teil in ihrer Griffwirkung zugunsten anderer individuell gewünschter Reifeneigenschaften nicht vollständig optimal ausgenutzt werden können. Diese Maßnahmen ermöglichen - wenn überhaupt - nur mit großem zusätzlichem Aufwand ein Griffverhalten, das sich in Abhängigkeit vom Zustand des Matsches, Schlamms oder Schnees individuell einstellt.

Der Erfindung liegt die Aufgabe zu Grunde in einfacher Weise einen Fahrzeugreifen - insbesondere einen Fahrzeugluftreifen - mit profiliertem Laufstreifen, mit wenigstens einer in Umfangsrichtung U des Fahrzeugluftreifens ausgerichteten und über den Umfang des Fahrzeugluftreifens erstreckten Profilblockreihe aus in Umfangsrichtung U hintereinander und jeweils durch eine Querrille voneinander getrennten Profilblockelementen, wobei in wenigstens einer Querrille ein radial aus dem Rillengrund erhabener, quer zur Längserstreckungsrichtung der Querrille erstreckter Steg ausgebildet ist, der die beiden durch die Querrille von einander getrennten und in Umfangsrichtung U benachbarten Profilblockelemente mit einander verbindet, zu schaffen, mit dem ein besser abgestimmtes Griffverhalten auf matschigem, schlammigem oder schneebedecktem Untergrund ermöglicht wird.

Die Aufgabe wird erfindungsgemäß durch die Ausbildung eines Fahrzeugreifens - insbesondere eines Fahrzeugluftreifens - mit profiliertem Laufstreifen, mit wenigstens einer in Umfangsrichtung U des Fahrzeugluftreifens ausgerichteten und über den Umfang des Fahrzeugluftreifens erstreckten Profilblockreihe aus in Umfangsrichtung U hintereinander und jeweils durch eine Querrille voneinander getrennten Profilblockelementen, wobei in wenigstens einer Querrille ein radial aus dem Rillengrund erhabener, quer zur Längserstreckungsrichtung der Querrille erstreckter Steg ausgebildet ist, der die beiden durch die Querrille von einander getrennten und in Umfangsrichtung U benachbarten Profilblockelemente mit einander verbindet, gemäß den Merkmalen von Anspruch 1 gelöst, bei dem der Steg an seiner nach radial außen zur Mantelfläche des Fahrzeugreifens weisenden Seite längs der Erstreckungsrichtung der Querrille mit einer gestuften Oberfläche mit N Stufen unterschiedlicher aus dem Rillengrund nach radial außen gemessener radialer Erstreckungshöhe h ausgebildet ist, die in jeder Stufe radial innerhalb der Mantelfläche des Fahrzeugluftreifens endet, wobei N eine natürliche Zahl ist mit N ≥ 2

Die am weitesten nach radial außen erstreckte Stufe kommt bereits bei geringen Höhen von Schnee, Matsch oder Schlamm in Wirkkontakt zum Schnee, Matsch bzw. Schlamm und verdichtet diesen so dass hierdurch bereits zusätzliche Schnee-Schnee-Verzahnung, bzw. Matsch-Matsch-Verzahnung bzw. Schlamm-Schlamm-Verzahnung auftritt, die ein wichtiger Faktor für den Griff auf Schnee, Matsch oder Schlamm zur Erzielung guter Traktions- und Bremseigenschaften darstellt. Darüber hinaus wirken die seitlichen Griffkanten der Stufe, die die Seitenführung verbessern. In Abhängigkeit der Höhe des Schnees, Matsches oder Schlammes treten weitere Stufen ebenfalls in Wirkkontakt zum Schnee, Matsch bzw. Schlamm und verdichtet diesen auch in ihrem Erstreckungsbereich zusätzlich, so dass hierdurch je nach Höhe des Schnees, Matsches bzw. Schlamms der Grad der Schnee-Schnee-Verzahnung, bzw. Matsch-Matsch-Verzahnung bzw. Schlamm-Schlamm-Verzahnung einfach in Abhängigkeit von den bereits in Wirkung befindlichen Stufen automatisch, d.h. selbständig erhöht wird. Darüber hinaus wirken in Abhängigkeit von der Höhe des Schnees, Matsches bzw. Schlamms und der hierdurch in Wirkung befindlichen Stufen jeweils zusätzlich die seitlichen Griffkanten der in Wirkung befindlichen Stufen, so dass abhängig von der Höhe des Schnees, Matsches bzw. Schlamms die Seitenführung automatisch nachgestellt wird.

Besonders vorteilhaft ist die Ausbildung gemäß den Merkmalen von Anspruch 2, bei der die Stufe der größten radialen Erstreckung aus dem Rillengrund sich über ein maximales Maß hₘₐₓ der radialen Erstreckung aus dem Rillengrund in radialer Richtung erstreckt, wobei für das Maß dieser maximalen Erstreckung hₘₐₓ aus dem Rillengrund in radialer Richtung gilt: 0,3·P_{T} ≤ hₘₐₓ ≤ 0,9 · P_{T} , wobei die Profiltiefe P_{T} das Maß der radialen Erstreckung der die radial äußere Mantelfläche der die Querrille begrenzenden Profilblockelemente in Position der maximalen Erstreckung hₘₐₓ aus dem Rillengrund ist. Hierdurch kann sichergestellt werden, dass die maßgeblichen Eindringtiefen des Schnees für Schnee-Schnee-Verzahnung abgedeckt sind.

Besonders vorteilhaft ist die Ausbildung gemäß den Merkmalen von Anspruch 3, wobei ausgehend von der Stufe mit der größten radialen Erstreckung aus dem Rillengrund zumindest längs einer der beiden Längserstreckungsrichtungen der Querrille - insbesondere längs beider Längserstreckungsrichtungen der Querrille - mehrere Stufen bis zum von der Stufe mit der größten radialen Erstreckung aus dem Rillengrund wegweisenden Erstreckungsende der Längserstreckung des Steges in der Querrille ausgebildet sind, wobei ausgehend von der Stufe mit der größten radialen Erstreckung aus dem Rillengrund bis zum von der Stufe mit der größten radialen Erstreckung aus dem Rillengrund wegweisenden Erstreckungsende der Längserstreckung des Steges jeweils das Maß der radialen Erstreckung aus dem Rillengrund von einer Stufe zur nächsten Stufe hin abnimmt.

Besonders vorteilhaft ist die Ausbildung gemäß den Merkmalen von Anspruch 4, wobei der Steg ausgehend von der Stufe mit der größten radialen Erstreckung aus dem Rillengrund längs einer der beiden Erstreckungsrichtungen der Querrille bis zum von der Stufe mit der größten radialen Erstreckung aus dem Rillengrund wegweisenden Ende der Längserstreckung des Steges in der Querrille unter Einschluss der Stufe mit größter radialer Erstreckung M Stufen aufweist, wobei M eine natürliche Zahl ist mit M ≤ N und M ≥ 2, wobei jeweils die radiale Erstreckungshöhe von einer Stufe zur nächsten Stufe hin abnimmt und sich das Maß der Differenz Δh der Erstreckungshöhe zweier benachbarter Stufen i und j jeweils wie folgt bemisst: Δh = aᵢⱼ · (hₘₐₓ/M), wobei für den Faktor aᵢⱼ für das jeweilige Paar benachbarter Sufen i und j jeweils gilt: 3 ≥ aᵢⱼ ≥ (1/3), wobei insbesondere für alle Paare benachbarter Stufen jeweils aᵢⱼ =1 gilt. Hierdurch kann in Abhängigkeit von Reifendimensionen und Fahrzeug, in dem der Reifen eingesetzt werden soll, das Griffverhalten individuell und gezielt optimiert eingestellt werden.

Besonders vorteilhaft ist die Ausbildung gemäß den Merkmalen von Anspruch 5, wobei der Steg längs der Erstreckungsrichtung der Querrille eine längs der Mittellinie der Querrille gemessene Gesamterstreckungslänge B aufweist, die kleiner ist als die längs der Mittellinie der Querrille gemessene Gesamtlängserstreckungslänge der Querrille, wobei jede Stufe des Steges längs der Erstreckungsrichtung der Querrille entlang der Mittellinie der Querrille gemessen jeweils eine Erstreckungslänge b aufweist, wobei für alle Verhältnisse VL= (bᵢ / bⱼ) der Erstreckunglängen bᵢ und bⱼ jeweils zweier Stufen i und j zueinander gilt: 10 ≥ VL ≥ 0,1, mit insbesondere VL=1.

Besonders vorteilhaft ist die Ausbildung gemäß den Merkmalen von Anspruch 6, wobei der Steg längs der Längserstreckungsrichtung der Querrille eine längs der Mittellinie der Querrille gemessene Gesamterstreckungslänge B aufweist, die kleiner als die längs der Mittellinie der Querrille gemessene Gesamtlängserstreckungslänge der Querrille ist, wobei die längs der Erstreckungsrichtung der Querrille entlang der Mittellinie der Querrille gemessene Erstreckungslänge b (b₁, b₂, b₃, b₄) der einzelnen Stufen ausgehend vom einen Ende des Steges zum anderen Ende des Steges über die gesamte Erstreckung des Steges von Stufe zu Stufe hin abnimmt.

Besonders vorteilhaft ist die Ausbildung gemäß den Merkmalen von Anspruch 7, wobei die längs der Erstreckungsrichtung der Querrille entlang der Mittellinie der Querrille gemessene Erstreckungslänge b (b₁, b₂, b₃, b₄) der einzelnen Stufen ausgehend vom einen Ende des Steges zum anderen Ende des Steges über die gesamte Erstreckung des Steges von Stufe zu Stufe jeweils halbiert ist.

Besonders vorteilhaft ist die Ausbildung gemäß den Merkmalen von Anspruch 8, wobei für die Zahl N der Stufen gilt: 10 ≥ N.

Die Erfindung wird im Folgenden anhand der in den Figuren 1 bis 8 dargestellten Ausführungsbeispiele näher erläutert. Hierin zeigen:
- Fig. 1: Draufsicht auf ein Laufstreifenprofil eines Fahrzeugluftreifens mit Profilblockreihen
- Fig. 2: Querschnittsdarstellung des Laufstreifenprofils von Fig.1 gemäß Schnitt II-II längs einer Querrille einer Profilblockreihe mit Darstellung einer stufig ausgebildeten Blockanbindung
- Fig. 3: Darstellung wie Fig. 2 mit alternativer gestufter Blockanbindung
- Fig. 4: Darstellung wie Fig. 2 mit weiterer alternativer gestufter Blockanbindung
- Fig. 5: Darstellung wie Fig. 2 mit weiterer alternativer Stufenausbildung
- Fig. 6: Darstellung wie Fig. 2 mit weiterer alternativer Stufenausbildung
- Fig. 7: Darstellung wie Fig. 2 mit weiterer alternativer Stufenausbildung
- Fig. 8: Darstellung wie Fig. 2 mit weiterer alternativer Stufenausbildung.

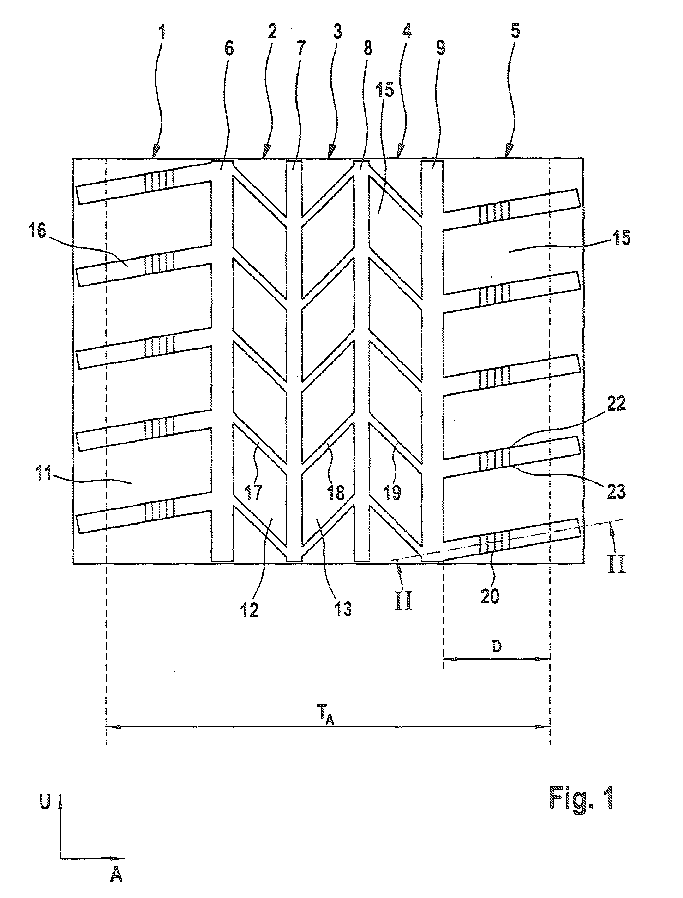

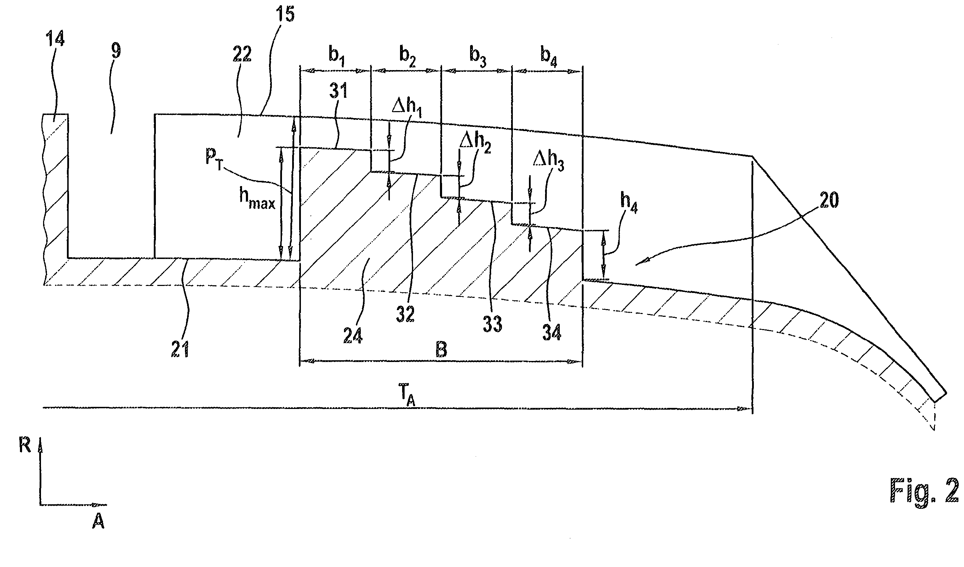

Fig. 1 und 2 zeigen ein Laufstreifenprofil eines Fahrzeugluftreifens bekannter Art - beispielsweise eines Fahrzeugluftreifens radialer Bauart mit nicht dargestellter Gürtellage und Gürtelbandage bekannter Art für PKW - im am Fahrzeug montierten unbelasteten Betriebszustand unter Normbedingungen.

Das Ausführungsbeispiel zeigt eine Ausbildung mit einer linken Schulterprofilblockreihe 1, einer rechten Schulterprofilblockreihe 5 und mit axial zwischen den beiden Schulterprofilblockreihen 1 und 5 angeordneten drei weiteren Profilblockreihen 2, 3 und 4 bekannter Art.

Die Schulterprofilblockreihe 5 ist die im montierten Zustand des Fahrzeugluftreifens zur Fahrzeugaußenseite weisende Schulterprofilblockreihe des Fahrzeugluftreifens. Die Profilblockreihe 1 ist die im montierten Zustand des Fahrzeugluftreifens zur Fahrzeuginnenseite weisende Schulterprofilblockreihe des Fahrzeugluftreifens.

Die Schulterprofilblockreihe 1 ist von der benachbarten Profilblockreihe 2 axial durch eine in Umfangsrichtung U des Fahrzeugluftreifens gerichtete und über den gesamten Umfang erstreckte Umfangsrille 6 getrennt. Die Profilblockreihe 2 ist von der benachbarten Profilblockreihe 3 durch eine in Umfangsrichtung U des Fahrzeugluftreifens gerichtete und über den gesamten Umfang erstreckte Umfangsrille 7 getrennt. Die Profilblockreihe 3 ist von der benachbarten Profilblockreihe 4 durch eine in Umfangsrichtung U des Fahrzeugluftreifens gerichtete und über den gesamten Umfang erstreckte Umfangsrille 8 getrennt. Die Profilblockreihe 4 ist von der rechten Schulterprofilblockreihe 5 durch eine in Umfangsrichtung U des Fahrzeugluftreifens gerichtete U über den gesamten Umfang des Fahrzeugluftreifens erstreckte Umfangsrille 9 axial getrennt.

Die Schulterprofilblockreihe 1 erstreckt sicht in Umfangsrichtung U des Fahrzeugluftreifens über den gesamten Umfang des Fahrzeugluftreifens und ist aus einer Vielzahl von in Umfangsrichtung U hintereinander und über den Umfang verteilt angeordneten Profilblockelementen 11 ausgebildet, die jeweils in Umfangsrichtung U durch eine Querrille 16 voneinander getrennt sind. Die Profilblockreihe 2 erstreckt sicht in Umfangsrichtung U des Fahrzeugluftreifens über den gesamten Umfang des Fahrzeugluftreifens und ist aus einer Vielzahl von in Umfangsrichtung U hintereinander und über den Umfang verteilt angeordneten Profilblockelementen 12 ausgebildet, die jeweils in Umfangsrichtung U durch eine Querrille 17 voneinander getrennt sind. Die Profilblockreihe 3 erstreckt sicht in Umfangsrichtung U des Fahrzeugluftreifens über den gesamten Umfang des Fahrzeugluftreifens und ist aus einer Vielzahl von in Umfangsrichtung U hintereinander und über den Umfang verteilt angeordneten Profilblockelementen 13 ausgebildet, die jeweils in Umfangsrichtung U durch eine Querrille 18 voneinander getrennt sind. Die Profilblockreihe 4 erstreckt sicht in Umfangsrichtung U des Fahrzeugluftreifens über den gesamten Umfang des Fahrzeugluftreifens und ist aus einer Vielzahl von in Umfangsrichtung U hintereinander und über den Umfang verteilt angeordneten Profilblockelementen 14 ausgebildet, die jeweils in Umfangsrichtung U durch eine Querrille 19 voneinander getrennt sind. Die rechte Schulterprofilblockreihe 5 erstreckt sicht in Umfangsrichtung U des Fahrzeugluftreifens über den gesamten Umfang des Fahrzeugluftreifens und ist aus einer Vielzahl von in Umfangsrichtung U hintereinander und über den Umfang verteilt angeordneten Profilblockelementen 15 ausgebildet, die jeweils in Umfangsrichtung U durch eine Querrille 20 voneinander getrennt sind.

In Fig. 1 ist die Reifenaufstandsbreite TA des Fahrzeugluftreifens eingezeichnet. Die Querrillen 16 erstrecken sich in axialer Richtung A des Fahrzeugreifens ausgehend von der Umfangsrille 6 nach axial außen bis in den axialen Erstreckungsbereich des Fahrzeugreifens außerhalb der Reifenaufstandsbreite TA. Die Querrillen 20 erstrecken sich in axialer Richtung A des Fahrzeugreifens ausgehend von der Umfangsrille 9 nach axial außen bis in den axialen Erstreckungsbereich des Fahrzeugreifens außerhalb der Reifenaufstandsbreite TA. Die Querrillen 17 erstrecken sich in axialer Richtung A des Fahrzeugreifens von der Umfangsrille 6 bis in die Umfangsrille 7. Die Querrillen 18 erstrecken sich in axialer Richtung A von der Umfangsrille 7 bis in die Umfangsrille 8. Die Querrillen 19 erstrecken sich in axialer Richtung A des Fahrzeugreifens von der Umfangsrille 8 bis in die Umfangsrille 9.

Zwei in Umfangsrichtung U hintereinander angeordnete Profilblockelemente 15 der Schulterprofilblockreihe 5 sind - wie in Fig. 2 dargestellt - jeweils durch einen radial aus dem Rillengrund 21 der die beiden Profilblockelemente 15 trennenden Querrille 20 erhabenen Steg 24 miteinander verbunden. Der Steg 24 erstreckt sich dabei in Umfangsrichtung U und somit quer zur Längserstreckung der Querrille von der einen die Querrille 20 begrenzenden, eine Rillenwand bildenden Flanke 23 des ersten Profilblockelementes 15 bis zu der die Querrille 20 begrenzenden, eine Rillenwand bildenden Flanke 22 des zweiten Profilblockelementes 15 durch die Querrille 20 hindurch.

Der Steg 24 erstreckt sich in axialer Richtung A des Fahrzeugluftreifens und somit längs der Längserstreckung der Querrille 20 längs der Mittellinie der Querrille 20 gemessen über eine Erstreckungslänge B, die kleiner ist als die längs der Mittellinie der Querrille gemessene Gesamtlängserstreckungslänge der Querrille. Wie in Fig. 2 dargestellt ist, ist der Steg 24 längs der Erstreckung der Querrille 20 gestuft ausgebildet mit N Stufen unterschiedlicher radialer Erstreckungshöhe, wobei 10 ≥ N. Im dargestellten Ausführungsbeispiel ist N = 4 und der Steg ist mit den vier Stufen 31, 32, 33, 34 ausgebildet.

Die erste Stufe 31 erstreckt sich längs der Mittellinie der Querrille 20 in axialer Richtung A über eine Erstreckungslänge b₁, die zweite Stufe 32 über eine Erstreckungslänge b₂, die dritte Stufe 33 über eine Erstreckungslänge b₃ und die vierte Stufe über eine Erstreckungslänge b₄. Die nach radial außen weisende Mantelfläche der vier Stufen 31, 32, 33, 34 ist im wesentlichen parallel zur Mantelfläche des Rillengrundes 21 ausgebildet.

Für alle Verhältnisse VL= (bᵢ / bⱼ) der Erstreckunglängen bᵢ und bⱼ jeweils zweier Stufen i und j des Stegs 24 zueinander gilt: 10 ≥VL ≥0,1.

Die zur Umfangsrille 9 nächst gelegene erste Stufe 31 bildet in dem in Fig. 2 dargestellten Ausführungsbeispiel die Stufe mit der größten aus dem Rillengrund 21 reichenden radialen Erstreckung mit einem an der zur Umfangsrille 9 weisenden Flanke des Steges 24 aus dem Rillengrund gemessenen Maß hₘₐₓ der radialen Erstreckung. In der in Fig. 2 dargestellten Ausführung ist ausgehend von der ersten zur Umfangsrille 9 weisenden Stufe 31 zur Schulteraußenseite hin jede folgende Stufe 32, 33 und 34 jeweils mit geringerer radialer Erstreckungshöhe ausgebildet. So ist die zweite Stufe 32 im Übergangsbereich zwischen zweiter Stufe 32 und erster Stufe 31 in ihrer radialen Erstreckungshöhe um das Maß Δh₁ kleiner ausgebildet als die erste Stufe 31. Ebenso ist die dritte Stufe 33 im Übergangsbereich zwischen zweiter Stufe 32 und dritter Stufe 33 um das Maß Δh₂ in ihrer radialen Erstreckung kleiner ausgebildet als die zweite Stufe 32. Ebenso ist die vierte Stufe 34 im Übergangsbereich zwischen dritter Stufe 33 und vierter Stufe 34 um das Maß Δh₃ kleiner ausgebildet als die dritte Stufe 33. An ihrer zur Schulteraußenseite weisenden Flanke ist die vierte Stufe 34 mit einer radialen Erstreckungshöhe h₄ aus dem Rillengrund 21 heraus ausgebildet.

Für die Erstreckungshöhen ergibt sich folgende Beziehung hₘₐₓ = Δh₁ + Δh₂+ Δh₃ + h₄. Ebenso ergibt sich für die Beziehung der Erstreckungslängen B = b₁ + b₂ + b₃ + b₄.

Die Gesamterstreckung B des Steges entspricht maximal 70 % der axialen Erstreckung D der jeweiligen Profilblockreihe. Im Bereich der Schulterprofilblockreihe ist das Maß D zwischen axialem Rand der Reifenaufstandsbreite TA und der die Schulterprofilblockreihe begrenzenden Umfangsrille 9 im Rillengrund der Querrille 20.

Im dargestellten Ausführungsbeispiel von Fig. 2 gilt VL=1 und somit b1 = b2 = b3 = b4. Ebenso gilt im dargestellten Ausführungsbeispiel von Fig. 2: Δh₁ = Δh₂ = Δh₃ und h₄> Δh₁, beispielsweise h₄ = (2 · Δh₁).

In einer anderen nicht dargestellten Ausführung gilt Δh₁ < Δh₂< Δh₃ < h₄.

In einer weiteren alternativen nicht dargestellten Ausführung gilt Δh₁ > Δh₂> Δh₃> h₄.

Das Maß hₘₐₓ ist jeweils so gewählt, dass für hₘₐₓ gilt: 0,3 · P_{T} ≤ hₘₐₓ ≤ 0,9 · P_{T}, wobei die Profiltiefe P_{T} das Maß der radialen Erstreckung der die radial äußeren Mantelfläche der die Querrille 20begrenzenden Profilblockelemente 15 aus dem Rillengrund 21 der Querrille 20 in Position der maximalen Erstreckung hₘₐₓ aus dem Rillengrund 21 ist.

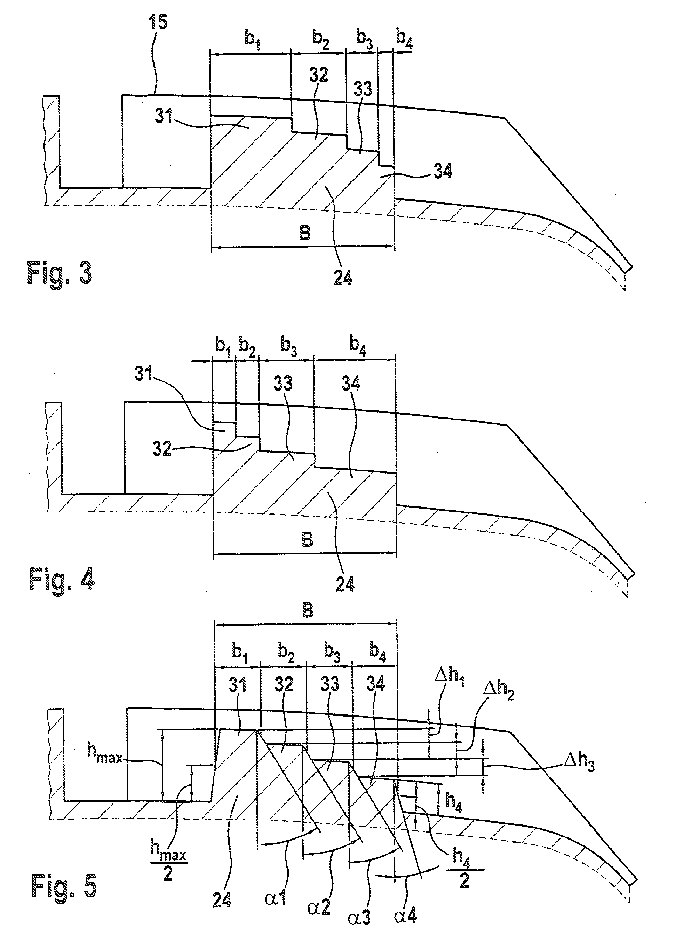

Fig. 3 zeigt eine alternative Ausbildung, bei der für die Beziehungen der Erstreckungslängen b₁ der ersten Stufe 31, b₂ der zweiten Stufe 32, b₃ der dritten Stufe 33 und b₄ der vierten Stufe 34 der von axial innen nach axial außen zur Reifenschulter hin im Fahrzeugluftreifen hintereinander angeordneten Stufen gilt:
b₁>b₂>b₃>b₄.

In besonderer Ausbildung sind die Erstreckungslänge b₁, b₂, b₃, b₄ der einzelnen Stufen 31,32,33 und 34 ausgehend vom einen Ende des Steges 24 zum anderen Ende des Steges 24 über die gesamte Erstreckungslänge des Steges 24 von Stufe zu Stufe jeweils halbiert. In diesem Fall gilt b₁ = 2 b₂, b₂ = 2 b₃, b₃ = 2 b₄.

Fig. 4 zeigt eine weitere alternative Ausbildung, bei der für die Beziehungen der Erstreckungslängen b₁ der ersten Stufe 31, b₂ der zweiten Stufe 32, b₃ der dritten Stufe 33 und b₄ der vierten Stufe 34 der von axial innen nach axial außen zur Reifenschulter hin im Fahrzeugluftreifen hintereinander angeordneten Stufen gilt:
b₁<b₂<b₃<b₄.

In besonderer Ausbildung sind auch hier die Erstreckungslänge b₁, b₂, b₃, b₄ der einzelnen Stufen 31, 32, 33 und 34 ausgehend vom einen Ende des Steges 24 zum anderen Ende des Steges 24 über die gesamte Erstreckungslänge des Steges 24 von Stufe zu Stufe jeweils halbiert. In diesem Fall gilt b₄ = 2 b₃, b₃ = 2 b₂, b₂ = 2 b₁.

Fig. 5 zeigt eine weitere alternative Ausbildung, bei der die den Steg 24 in axialer Richtung A begrenzenden Flanken sowie die in axialer Richtung A die Stufen begrenzenden Übergangsflanken zwischen den Stufen 31 und 32, 32 und 33, und 33 und 34 jeweils anders als in den Figuren 2,3 und 4 dargestellt jeweils einen Neigungswinkel α₁, α₂, α₃ bzw. α₄ zur radialen Richtung R einschließen. Der Steg 24 erstreckt sich auch bei dieser Ausführung in axialer Richtung A des Fahrzeugluftreifens und somit längs der Längserstreckung der Querrille 20 über eine Erstreckungslänge B. Die Erstreckungslänge B bildet dabei den axialen Abstand zwischen der zur Umfangsrille 9 weisenden Flanke und der zur Reifenschulter hinweisenden Flanke des Steges 24 jeweils gemessen zwischen der radialen Position der halben Erstreckungshöhe der jeweiligen Flanke, d.h. zwischen Position in halber radialen Erstreckungshöhe von hₘₐₓ der zur Umfangsrille hin weisenden Flanke und der Position der halben Erstreckungshöhe von h₄ in der zur Reifenschulter hinweisenden Flanke des Steges 24.

Ebenso wird das axiale Erstreckungsmaß b₁ der ersten Stufe 31 ausgehend von der Position der halben maximalen Erstreckungshöhe von hₘₐₓ der zur Umfangsrille 9 gerichteten Flanke des Steges 24 bis zur halben Erstreckungshöhe von Δh₁ zwischen äußerer Mantelfläche der zweiten Stufe 32 und der äußeren Mantelfläche der ersten Stufe 31 gemessen. Die axiale Erstreckung b₂ der zweite Stufe 32 wird analog ausgehend von der halben Erstreckungshöhe (Δh₁) zwischen äußerer Mantelfläche der ersten Stufe 31 und äußerer Mantelfläche der zweiten Stufe 32 bis zur radialen Position der halben Erstreckungshöhe von Δh₂ zwischen äußerer Mantelfläche der dritten Stufe 33 und der äußeren Mantelfläche der zweiten Stufe 32 gemessen. Die axiale Erstreckung b₃ der dritten Stufe 33 wird analog ausgehend von der halben Erstreckungshöhe (Δh₂) zwischen äußerer Mantelfläche der zweiten Stufe 32 und äußerer Mantelfläche der dritten Stufe 33 bis zur radialen Position der halben Erstreckungshöhe von Δh₃ zwischen äußerer Mantelfläche der vierten Stufe 34 und der äußeren Mantelfläche der dritten Stufe 33 gemessen. Die axiale Erstreckung b₄ der vierten Stufe 34 wird analog ausgehend von der halben Erstreckungshöhe (Δh₃) zwischen äußerer Mantelfläche der dritten Stufe 33 und äußerer Mantelfläche der vierten Stufe 34 bis zur radialen Position der halben maximalen Erstreckungshöhe von h₄ der zur Reifenschulter gerichteten Flanke des Steges 24 gemessen.

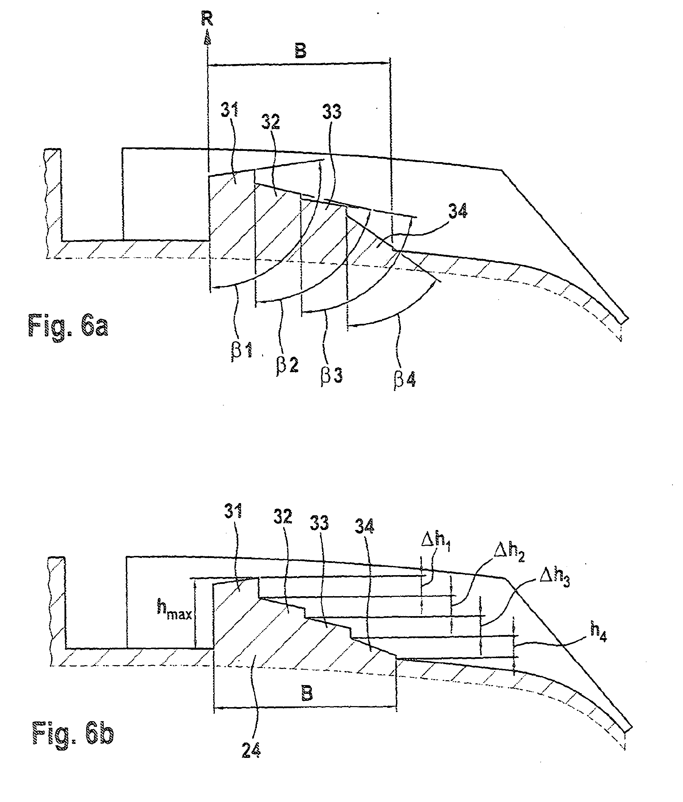

Fig. 6 zeigt ein Ausführungsbeispiel, bei dem die radial äußeren Mantelflächen der Stufen 31, 32, 33 und 34 jeweils einen Winkel β₁, β₂, β₃ bzw. β₄ zur radialen Richtung R einschließen mit 80°≤β₁≤100°, 80°≤β₂≤100°, 80°≤β₃≤100° und 80°≤β₄≤100°. Im dargestellten Ausführungsbeispiel gilt 90°≤β₁≤100°, 80°≤β₂< 90°, 80°≤β₃<90° und 80°≤β₄<90°. Der radiale Höhenunterschied Δh₁, Δh₂, Δh₃ und Δh₄ zwischen den jeweiligen benachbarten Stufen wird in diesem Fall jeweils zwischen maximaler radialer Erstreckung der einen der beiden benachbarten Stufen und maximaler radialer Erstreckung der anderen der beiden benachbarten Stufen gemessen. So ist beispielsweise Δh₁ zwischen erster Stufe 31 und zweiter Stufe 32 das radiale Erstreckungsmaß, das zwischen maximaler Erstreckungshöhe hₘₐₓ der ersten Stufe 31 und maximaler Erstreckung der zweiten Stufe 32 gemessen wird. Δh₂ ist die Differenz der radialen Erstreckung von maximaler Erstreckungshöhe der zweiten Stufe 32 und maximaler Erstreckungshöhe der dritten Stufe 33. Δh₃ ist die Differenz der radialen Erstreckung von maximaler Erstreckungshöhe der dritten Stufe 33 und maximaler Erstreckungshöhe der vierten Stufe 34. Δh₄ ist das Maß der maximalen radialen Erstreckung der vierten Stufe 34 aus dem Rillengrund.

In der in Fig. 6 dargestellten Ausführung sind die radial äußeren Mantelflächen der zweiten Stufe 32, der dritten Stufe 33 und der vierten Stufe 34 in gleicher axialer Richtung A geneigt, so dass die Stufen 32, 33 und 34 jeweils von axial innen nach axial außen zur Reifenschulter hin abfallen. Die erste Stufe 31 ist in ihrem Neigungswinkel β1 so ausgebildet, dass dessen Neigung zur Innenseite des Fahrzeugluftreifens hin abfällt.

In einer besonderen, nicht dargestellten Ausführung ist
(β₁ - 90°) = (90°- β₂) =(90° - β₃) = (90° - β₄) gewählt.

Die in den Fig.2 bis Fig.5 dargestellten Ausführungsbeispiele sind Ausführungsbeispiele mit β₁ = β₂ = β₃ = β₄ = 90°

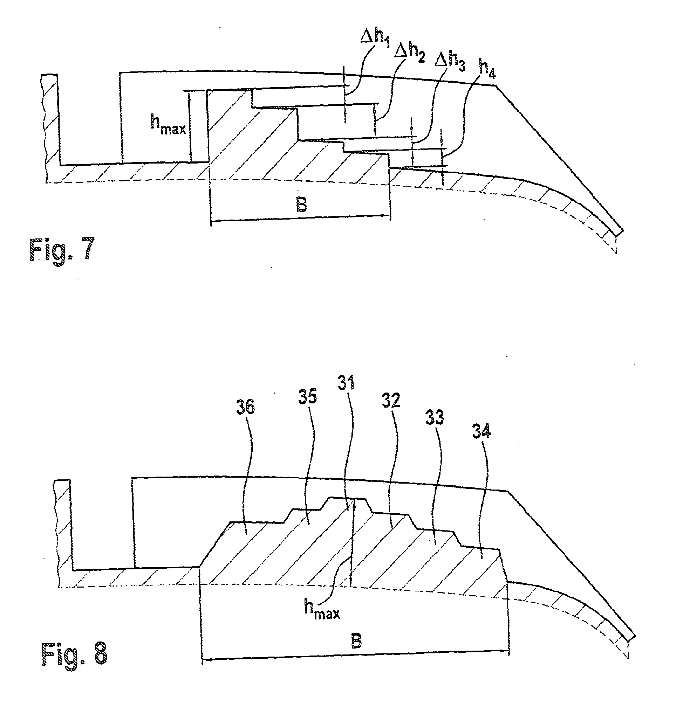

Fig. 7 zeigt eine alternative Ausbildung, bei der für die Winkel β₁, β₂, β₃ bzw. β₄ zur radialen Richtung R gilt: 80°<β₁ < 90°, 80°≤β₂ < 90°, 80°≤β₃ <90° und 80°≤β₄ < 90°. Anders als in dem in den Fig. 6 dargestellten Ausführungsbeispiel sind somit die radial äußeren Mantelflächen der Stufen 31, 32, 33 und 34 in gleicher axialer Richtung A geneigt, so dass die Stufen 31, 32, 33 und 34 jeweils von axial innen nach axial außen zur Reifenschulter hin abfallen.

In einer besonderen nicht dargestellten Ausführung ist β₁ = β₂ = β₃ = β₄ gewählt.

Fig. 8 zeigt ein Ausführungsbeispiel eines Steges 24 mit einer ersten Stufe 31 maximaler radialer Erstreckung hₘₐₓ, bei der - wie in den vorangegangenen Darstellungen - zur axialen Außenseite des Fahrzeugluftreifens hin drei weitere Stufen 32, 33 und 34 mit jeweils gegenüber der vorangegangenen Stufe reduzierter radialer Erstreckungshöhe ausgebildet sind. Darüber hinaus sind ausgehend von dieser ersten Stufe 31 auch zur axialen Innenseite des Fahrzeugluftreifens in Richtung zur Umfangsrille 9 hin zwei weitere Stufen 35 und 36 ausgebildet sind, die ebenfalls ausgehend von der ersten Stufe 31 in Richtung zur Umfangsrille 9 hin mit jeweils gegenüber der vorangegangenen Stufe mit reduzierter radialer Erstreckungshöhe ausgebildet sind. In diesem Ausführungsbeispiel ist N = 6 und der Steg ist mit den sechs Stufen 31, 32, 33, 34, 35 und 36 ausgebildet.

Der Steg 24 weist bei dieser Ausbildung ausgehend von der Stufe 31 mit der größten radialen Erstreckung aus dem Rillengrund 21 längs einer der zur Reifenschulter hin weisenden Erstreckungsrichtung der Querrille 20 bis zum von der Stufe 31 mit der größten radialen Erstreckung aus dem Rillengrund 21 wegweisenden Ende der Längserstreckung des Steges 24 in der Querrille 20 unter Einschluss der Stufe 31 mit höchster radialer Erstreckung M Stufen 31,32,33 und 34 auf, wobei M eine natürliche Zahl ist mit M ≤ N und M ≥ 2, wobei jeweils die radiale Erstreckungshöhe von einer Stufe zur nächsten Stufe hin abnimmt und sich das Maß der Differenz Δh der Erstreckungshöhe zweier benachbarter Stufen i und j jeweils wie folgt bemisst: Δh = aᵢⱼ · (hₘₐₓ/M), wobei für den Faktor aᵢⱼ für das jeweilige Paar benachbarter Sufen i und j jeweils gilt: 3 ≥ aᵢⱼ ≥ (1/3).

Im konkret dargestellten Ausführungsbeispiel von Fig.8 gilt für die von der Stufe 31 mit größter radialer Erstreckung zur Reifenschulter hin ausgebildeten Stufen 31,32,33 und 34 somit M=4. Für die von der Stufe 31 mit größter radialer Erstreckung zur Reifenmitte hin ausgebildeten Stufen 31,35 und 36 gilt somit M=3.

In den in den Fig.2 bis Fig.7 dargestellten Ausführungen gilt M=N.

In besonderer Ausführung ist dabei jeweils für alle Paare benachbarter Stufen aᵢⱼ =1 gewählt.

Die oben dargestellten Ausführungen wurden erläutert am Beispiel einer Querrille 20, der in Fig. 1 rechts dargestellten Schulterprofilblockreihe 5.

In einem Ausführungsbeispiel sind dabei die Querrillen 16,17,18 und 19 der anderen Profilblockreihen 1, 2, 3 und 4 nicht mit einem derartig gestuften Steg 24 ausgebildet, sondern sind lediglich entweder ohne Stege oder mit herkömmlichen ungestuften Stegen ausgebildet.

In einer anderen Ausführung sind zusätzlich auch die Querrillen 16 der linken Profilblockreihe zumindest teilweise oder alle mit einer der in den beschriebenen und/oder dargestellten gestuften Stegen 24 ausgebildet. Die Querrillen 17, 18 und 19 der Profilblockreihen 2, 3 und 4 sind nicht mit einem derartig gestuften Steg 24 ausgebildet, sondern sind lediglich entweder ohne Stege oder mit herkömmlichen ungestuften Stegen ausgebildet.

In einer weiteren Ausbildung sind sowohl die Querrillen 20 der rechten Schulterprofilblockreihe 5 als auch die Querrillen 16 der linken Schulterprofilblockreihe 1 als auch Querrillen 17, 18 und/oder 19 einer oder mehrerer der zwischen den Schulterprofilblockreihen ausgebildeten Profilblockreihen 2, 3 und 4 in analoger Weise zumindest teilweise oder alle mit einer der in den beschriebenen und/oder dargestellten gestuften Stegen 24 ausgebildet.

Der Fahrzeugluftreifen der oben dargestellten Ausführungen ist beispielsweise ein Winterreifen, wobei in den Darstellungen zur Vereinfachung auf die bei Winterreifen bekannten in den Profilblockelementen ausgebildeten Feineinschnitte weggelassen sind.

### Bezugszeichenliste

### (Teil der Beschreibung)

- 1: Schulterprofilblockreihe
- 2: Profilblockreihe
- 3: Profilblockreihe
- 4: Profilblockreihe
- 5: Schulterprofilblockreihe
- 6: Umfangsrille
- 7: Umfangsrille
- 8: Umfangsrille
- 9: Umfangsrille
- 11: Profilblockelement
- 12: Profilblockelement
- 13: Profilblockelement
- 14: Profilblockelement
- 15: Profilblockelement
- 16: Querrille
- 17: Querrille
- 18: Querrille
- 19: Querrille
- 20: Querrille
- 21: Rillengrund
- 22: Flanke
- 23: Flanke
- 24: Steg
- 31: Stufe
- 32: Stufe
- 33: Stufe
- 34: Stufe
- 35: Stufe
- 36: Stufe

## Patentansprüche

1. Fahrzeugreifen - insbesondere Fahrzeugluftreifen - mit profiliertem Laufstreifen, mit wenigstens einer in Umfangsrichtung U des Fahrzeugluftreifens ausgerichteten und über den Umfang des Fahrzeugluftreifens erstreckten Profilblockreihe (5) aus in Umfangsrichtung U hintereinander und jeweils durch eine Querrille (20) voneinander getrennten Profilblockelementen (15), wobei in wenigstens einer Querrille (20) ein radial aus dem Rillengrund (21) erhabener, quer zur Längserstreckungsrichtung der Querrille (20) erstreckter Steg (24) ausgebildet ist, der die beiden durch die Querrille (20) von einander getrennten und in Umfangsrichtung U benachbarten Profilblockelemente (15) mit einander verbindet,
**dadurch gekennzeichnet,**
**dass** der Steg (24) an seiner nach radial außen zur Mantelfläche des Fahrzeugreifens weisenden Seite längs der Erstreckungsrichtung der Querrille (20) mit einer gestuften Oberfläche mit N Stufen (31,32,33,34) unterschiedlicher aus dem Rillengrund (21) nach radial außen gemessener radialer Erstreckungshöhe h ausgebildet ist, die in jeder Stufe (31,32,33,34) radial innerhalb der Mantelfläche des Fahrzeugluftreifens endet, wobei N eine natürliche Zahl ist mit N ≥ 2.

2. Fahrzeugreifen gemäß den Merkmalen des Anspruchs 1,
wobei die Stufe (31) der größten radialen Erstreckung aus dem Rillengrund (21) sich über eine maximale Erstreckungshöhe hₘₐₓ aus dem Rillengrund (21) in radialer Richtung R erstreckt, wobei für das Maß dieser maximalen Erstreckung hₘₐₓ aus dem Rillengrund (21) in radialer Richtung R gilt: 0,3· P_{T} ≤ h_{max:}≤ 0,9 · P_{T} , wobei die Profiltiefe P_{T} das Maß der radialen Erstreckung R der die radial äußere Mantelfläche der die Querrille (20) begrenzenden Profilblockelemente (15) in Position der maximalen Erstreckung hₘₐₓ aus dem Rillengrund (21) ist.

3. Fahrzeugreifen gemäß den Merkmalen von einem oder mehreren der vorangegangenen Ansprüche,
wobei ausgehend von der Stufe (31) mit der größten radialen Erstreckung aus dem Rillengrund (21) zumindest längs einer der beiden Längserstreckungsrichtungen der Querrille (20) - insbesondere längs beider Längserstreckungsrichtungen der Querrille (20) - mehrere Stufen (32,33,34) bis zum von der Stufe (31) mit der größten radialen Erstreckung aus dem Rillengrund (21) wegweisenden Erstreckungsende der Längserstreckung des Steges (24) in der Querrille (20) ausgebildet sind, wobei ausgehend von der Stufe (31) mit der größten radialen Erstreckung aus dem Rillengrund (21) bis zum von der Stufe (31) mit der größten radialen Erstreckung aus dem Rillengrund (21) wegweisenden Erstreckungsende der Längserstreckung des Steges (24) jeweils das Maß der radialen Erstreckung aus dem Rillengrund (21) von einer Stufe zur nächsten Stufe hin abnimmt.

4. Fahrzeugreifen gemäß den Merkmalen des Anspruchs 3,
wobei der Steg (24) ausgehend von der Stufe mit der größten radialen Erstreckung aus dem Rillengrund (21) längs einer der beiden Erstreckungsrichtungen der Querrille bis zum von der Stufe mit der größten radialen Erstreckung aus dem Rillengrund (21) wegweisenden Ende der Längserstreckung des Steges (24) in der Querrille unter Einschluss der Stufe mit größter radialer Erstreckung M Stufen aufweist, wobei M eine natürliche Zahl ist mit M ≤ N und M ≥ 2, wobei jeweils die radiale Erstreckungshöhe von einer Stufe zur nächsten Stufe hin abnimmt und sich das Maß der Differenz Δh der Erstreckungshöhe zweier benachbarter Stufen i und j jeweils wie folgt bemisst: Δh = aᵢⱼ · (hₘₐₓ/M), wobei für den Faktor aᵢⱼ für das jeweilige Paar benachbarter Sufen i und j jeweils gilt: 3 ≥ aᵢⱼ ≥(1/3), wobei insbesondere für alle Paare benachbarter Stufen jeweils aᵢⱼ =1 gilt.

5. Fahrzeugreifen gemäß den Merkmalen von einem oder mehreren der vorangegangenen Ansprüche,
wobei der Steg (24) längs der Erstreckungsrichtung der Querrille (20) eine längs der Mittellinie der Querrille (20) gemessene Gesamterstreckungslänge B aufweist, die kleiner ist als die längs der Mittellinie der Querrille (20) gemessene Gesamtlängserstreckungslänge der Querrille (20),
wobei jede Stufe des Steges (24) längs der Erstreckungsrichtung der Querrille (20) entlang der Mittellinie der Querrille (20) gemessen jeweils eine Erstreckungslänge b aufweist, wobei für alle Verhältnisse VL= (bᵢ / bⱼ) der Erstreckunglängen bᵢ und bⱼ jeweils zweier Stufen i und j zueinander gilt: 10 ≥ VL ≥ 0,1, mit insbesondere VL=1.

6. Fahrzeugreifen gemäß den Merkmalen von einem oder mehreren der vorangegangenen Ansprüche,
wobei der Steg (24) längs der Längserstreckungsrichtung der Querrille (20) eine längs der Mittellinie der Querrille (20) gemessene Gesamterstreckungslänge B aufweist, die kleiner als die längs der Mittellinie der Querrille (20) gemessene Gesamtlängserstreckungslänge der Querrille (20) ist,
wobei die längs der Erstreckungsrichtung der Querrille (20) entlang der Mittellinie der Querrille (20) gemessene Erstreckungslänge b (b₁, b₂, b₃, b₄) der einzelnen Stufen (31,32,33,34) ausgehend vom einen Ende des Steges (24) zum anderen Ende des Steges (24) über die gesamte Erstreckung des Steges (24) von Stufe zu Stufe hin abnimmt.

7. Fahrzeugreifen gemäß den Merkmalen von Anspruch 6,
wobei die längs der Erstreckungsrichtung der Querrille (20) entlang der Mittellinie der Querrille (20) gemessene Erstreckungslänge b (b₁, b₂, b₃, b₄) der einzelnen Stufen ausgehend vom einen Ende des Steges (24) zum anderen Ende des Steges (24) über die gesamte Erstreckung des Steges (24) von Stufe zu Stufe jeweils halbiert ist.

8. Fahrzeugreifen gemäß den Merkmalen von einem oder mehreren der vorangegangenen Ansprüche,
wobei für die Zahl N der Stufen gilt: 10 ≥ N.

## Claims

1. Vehicle tyre - in particular a pneumatic vehicle tyre - with a profiled tread, with at least one row of profile blocks (5), which is aligned in the circumferential direction U of the pneumatic vehicle tyre and made to extend over the circumference of the pneumatic vehicle tyre and which comprises profile block elements (15) one behind the other in the circumferential direction U and respectively separated from one another by a transverse channel (20), wherein a web (24) is formed in at least one transverse channel (20), rising up radially from the channel base (21), made to extend transversely in relation to the direction of longitudinal extent of the transverse channel (20) and interconnecting the two profile block elements (15) that are adjacent in the circumferential direction U and are separated from each other by the transverse groove (20), **characterized in that** the web (24) is formed on its side facing radially outwards in relation to the lateral surface of the vehicle tyre, along the direction of extent of the transverse channel (20), with a stepped surface comprising N steps (31, 32, 33, 34) of differing height of radial extent h, measured radially outwards from the channel base (21), which in each step (31, 32, 33, 34) ends radially within the lateral surface of the pneumatic vehicle tyre, where N is a natural number with N ≥ 2.

2. Vehicle tyre according to the features of Claim 1, wherein the step (31) of greatest radial extent from the channel base (21) extends in the radial direction R from the channel base (21) over a maximum height of extent hₘₐₓ, where 0.3 · P_{T} ≤ hₘₐₓ ≤ 0.9 · P_{T} applies for the degree of this maximum extent hₘₐₓ from the channel base (21) in the radial direction R, with the profile depth P_{T} being the degree of radial extent R of the profile block elements (15), bounding the radially outer lateral surface of the transverse channel (20), in the position of maximum extent hₘₐₓ from the channel base (21).

3. Vehicle tyre according to the features of one or more of the preceding claims, wherein, starting from the step (31) with the greatest radial extent from the channel base (21), a number of steps (32, 34) are formed along one of the two directions of longitudinal extent of the transverse channel (20)
- in particular along both directions of longitudinal extent of the transverse channel (20)
- up to the end of the longitudinal extent of the web (24) in the transverse channel (20) that is remote from the step (31) with the greatest radial extent from the channel base (21), wherein, starting from the step (31) with the greatest radial extent from the channel base (21) up to the end of the longitudinal extent of the web (24) that is remote from the step (31) with the greatest radial extent from the channel base (21), the degree of radial extent from the channel base (21) respectively decreases from one step to the next step.

4. Vehicle tyre according to the features of Claim 3, wherein, starting from the step with the greatest radial extent from the channel base (21), the web (24) has M steps along one of the two directions of extent of the transverse channel up to the end of the longitudinal extent of the web (24) in the transverse channel that is remote from the step with the greatest radial extent from the channel base (21), including the step with the greatest radial extent, where M is a natural number with M ≤ N and M ≥ 2, with the radial height of extent respectively decreasing from one step to the next step and the degree of difference Δh in the extent of height between two adjacent steps i and j respectively being calculated as follows: Δh = aᵢⱼ · (hₘₐₓ/M), where 3 ≥ aᵢⱼ ≥ (1/3) respectively applies for the factor aᵢⱼ for the respective pair of adjacent steps i and j, with aᵢⱼ = 1 respectively applying in particular for all the pairs of adjacent steps.

5. Vehicle tyre according to the features of one or more of the preceding claims, wherein the web (24) has along the direction of extent of the transverse channel (20) an overall length of extent B, measured along the centre line of the transverse channel (20), which is less than the overall length of longitudinal extent of the transverse channel (20), measured along the centre line of the transverse channel (20), wherein each step of the web (24) respectively has along the direction of extent of the transverse channel (20) a length of extent b, measured along the centre line of the transverse channel (20), where 10 ≥ VL ≥ 0.1 applies for all ratios VL = (bᵢ/bⱼ) of the lengths of extent bᵢ and bⱼ of respective pairs of steps i and j in relation to each other, with in particular VL = 1.

6. Vehicle tyre according to the features of one or more of the preceding claims, wherein the web (24) has along the direction of longitudinal extent of the transverse channel (20) an overall length of extent B, measured along the centre line of the transverse channel (20), which is less than the overall length of longitudinal extent of the transverse channel (20), measured along the centre line of the transverse channel (20), wherein, starting from one end of the web (24) to the other end of the web (24), the length of extent b (b₁, b₂, b₃, b₄) of the individual steps (31, 32, 33, 34) along the direction of extent of the transverse channel (20), measured along the centre line of the transverse channel (20), decreases from step to step over the entire extent of the web (24).

7. Vehicle tyre according to the features of Claim 6, wherein, starting from one end of the web (24) to the other end of the web (24), the length of extent B (b₁, b₂, b₃, b₄) of the individual steps along the direction of extent of the transverse channel (20), measured along the centre line of the transverse channel (20), is respectively halved from step to step over the entire extent of the web (24).

8. Vehicle tyre according to the features of one or more of the preceding claims, wherein 10 ≥ N applies for the number N of steps.

## Revendications

1. Bandage pour roue de véhicule, en particulier bandage pneumatique pour roue de véhicule, doté d'une bande de roulement profilée qui présente au moins une série (5) de bloc profilé qui est orientée dans le sens de la périphérie U du bandage pneumatique pour roue de véhicule et qui s'étend sur toute la périphérie du bandage pneumatique pour roue de véhicule,
la série étant constituée d'éléments (15) de bloc profilé disposés les uns derrière les autres dans le sens de la périphérie U et séparés les uns des autres par une rainure transversale (20),
une nervure (24) rehaussée radialement par rapport au fond (21) de la rainure et s'étendant transversalement par rapport à la direction d'extension longitudinale de la rainure transversale (20) étant formée dans au moins une rainure transversale (20), la nervure reliant l'un à l'autre les deux éléments (15) de bloc profilé séparés l'un de l'autre par la rainure transversale (20) et voisins dans le sens de la périphérie U,
**caractérisé en ce que**
sur son côté tourné radialement vers l'extérieur en direction de la surface d'enveloppe du bandage pour roue de véhicule, le long de la direction de l'extension de la nervure transversale (20), la nervure (24) est configurée comme surface étagée présentant N étages (31, 32, 33, 34) qui présentent différentes hauteurs d'extension radiale (h) mesurées radialement vers l'extérieur depuis le fond (21) de la rainure, chaque étage (31, 32, 33, 34) se terminant radialement à l'intérieur de la surface d'enveloppe du bandage pneumatique pour roue de véhicule, N étant un nombre naturel et N ≥ 2.

2. Bandage pour roue de véhicule selon les caractéristiques de la revendication 1, dans lequel l'étage (31) qui présente la plus grande extension radiale s'étend, partant du fond (21) de la rainure, sur une hauteur maximale d'extension (hₘₐₓ) depuis le fond (21) de la rainure dans la direction radiale R, la valeur de cette extension maximale hₘₐₓ depuis le fond (21) de la rainure dans la direction radiale R vérifiant la relation 0,3.P_{T} ≤ hₘₐₓ ≤ 0,9.P_{T}, la profondeur P_{T} du profilé étant la valeur de l'extension radiale R des éléments (15) de bloc profilé qui délimite la surface d'enveloppe radialement extérieure de la rainure transversale (20) dans la position de l'extension maximale hₘₐₓ depuis le fond (21) de la rainure.

3. Bandage pour roue de véhicule selon les caractéristiques d'une ou plusieurs des revendications qui précèdent, dans lequel la valeur de l'extension radiale depuis le fond (21) de la rainure diminue d'un étage à l'étage suivant, partant de l'étage (31) qui présente la plus grande extension radiale depuis le fond (21) de la rainure, tandis qu'au moins le long d'une des deux directions d'extension longitudinale de la rainure transversale (20) et en particulier le long des deux directions d'extension longitudinale de la rainure transversale (20), plusieurs étages (32, 33, 34) sont formés dans la rainure transversale (20) jusqu'à l'extrémité de l'extension longitudinale de la nervure (24) qui n'est pas tournée vers l'étage (31) qui présente la plus grande extension radiale depuis le fond (21) de la rainure et partant de l'étage (31) qui présente la plus grande extension radiale depuis le fond (21) de la rainure jusqu'à l'extrémité de l'extension longitudinale de la nervure (24) non tournée vers l'étage (31) qui présente la plus grande extension radiale depuis le fond (21) de la rainure.

4. Bandage pour roue de véhicule selon les caractéristiques de la revendication 3, dans lequel, partant de l'étage à plus grande extension radiale depuis le fond (21) de la rainure, la nervure (24) présente M étages, M étant un nombre naturel, avec M ≤ N et M ≥ 2, le long d'une des deux directions d'extension de la rainure transversale et jusqu'à l'extrémité de l'extension longitudinale de la nervure (24) dans la rainure transversale, non tournée vers l'étage qui présente la plus grande extension radiale depuis le fond (21) de la rainure et sans compter l'étage qui présente la plus grande extension radiale, la hauteur d'extension radiale diminuant d'un étage à l'étage suivant, la valeur de la différence Δh entre les hauteurs d'extension de deux étages i et j voisins étant définie comme suit : Δh = aᵢⱼ.(hₘₐₓ/M), le facteur aᵢⱼ pour chaque paire d'étages i et j voisins vérifiant la relation 3 ≥ aᵢⱼ ≥ (1/3), avec aᵢⱼ=1 en particulier pour toutes les paires d'étages voisins.

5. Bandage pour roue de véhicule selon les caractéristiques d'une ou plusieurs des revendications qui précèdent, dans lequel la nervure (24) présente le long de la direction d'extension de la rainure transversale (20) une longueur B d'extension totale mesurée le long de la ligne centrale de la rainure transversale (20) plus petite que la longueur d'extension totale de la nervure transversale (20) mesurée le long de la ligne centrale de la rainure transversale (20), chaque étage de la nervure (24) présentant le long de la ligne centrale de la rainure transversale (20) une longueur d'extension b dans la direction d'extension de la rainure transversale (20), la relation : 10 ≥ VL ≥ 0,1, avec en particulier VL = 1, étant vérifiée pour tous les rapports VL = (bᵢ/bⱼ) des longueurs d'extension bᵢ et bⱼ de deux étages i et j.

6. Bandage pour roue de véhicule selon les caractéristiques d'une ou plusieurs des revendications qui précèdent, dans lequel la nervure (24) présente le long de la direction d'extension longitudinale de la rainure transversale (20) une longueur d'extension totale B mesurée le long de la ligne centrale de la rainure transversale (20) plus petite que la longueur d'extension totale de la rainure transversale (20) mesurée le long de la ligne centrale de la rainure transversale (20), la longueur d'extension b (b₁, b₂, b₃, b₄) des différents étages (31, 32, 33, 34) mesurée le long de la direction d'extension de la rainure transversale (20) le long de la ligne centrale de la rainure transversale (20), diminuant d'un étage au suivant sur toute l'extension de la nervure (24) depuis une extrémité de la nervure (24) jusqu'à l'autre extrémité de la nervure (24).

7. Bandage pour roue de véhicule selon les caractéristiques de la revendication 6, dans lequel la longueur d'extension b (b₁, b₂, b₃, b₄) des différents étages, mesurée le long de la direction d'extension de la rainure transversale (20) le long de la ligne centrale de la rainure transversale (20), est divisée par deux d'un étage au suivant sur toute l'extension de la nervure (24) depuis une extrémité de la nervure (24) jusqu'à l'autre extrémité de la nervure (24).

8. Bandage pour roue de véhicule selon les caractéristiques d'une ou plusieurs des revendications qui précèdent, dans lequel le nombre N des étages vérifie la relation 10 ≥ N.
